# EUROPEAN PATENT APPLICATION

(11) **EP 4 439 821 A1**
(43) Date of publication of application: **02.10.2024**
(21) Application number: 24160593.0
(22) Date of filing: 29.02.2024
(51) Int. Cl.: H01M 50/209, H01M 50/213, H01M 50/24

(54) **BATTERY PACK PROVIDED WITH FIRE PROTECTION MATERIALS SHEET**

(30) Priority: 26.03.2023 KR 20230039356; 14.07.2023 KR 20230092044
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery pack provided with a fire protection materials (FPM) sheet includes a battery block including a plurality of battery cells electrically connected to one another, a battery case defining an accommodating space in which the battery block is accommodated, and a wing portion adjacent to the battery case and bent to cover at least four surfaces of the battery block.

## Description

### BACKGROUND

### 1. Field

Aspects of one or more embodiments relate to a battery pack.

### 2. Description of the Related Art

Battery packs include a plurality of battery cells. The plurality of battery cells are installed in an accommodating space inside a case. When a fire occurs in a battery cell, the fire may not be easily extinguished. This is because the materials of the battery cell chemically react with each other, causing continuous combustion. To solve this problem, a method of applying a fire protection materials (FPM) sheet, which may spray a fire protection agent under certain conditions, inside the battery pack has been studied.

However, if an FPM sheet is placed inside a battery pack, hydrogen and a methane gas, generated during a chemical reaction with the material of the battery cell, may chemically react with the fire protection agent, thereby blocking oxygen, and thus inhibiting a secondary reaction.

Thus, if an FPM sheet is placed inside a battery pack, it is desirable that the FPM sheet be arranged for optimal performance.

### SUMMARY

According to an aspect of one or more embodiments, a battery pack having fire protection capability to a fire inside the battery pack is provided. According to an aspect of one or more embodiments, a battery pack with maximized or increased fire protection capability to a fire by improving a structure in which a fire protection materials (FPM) sheet is installed inside a case of a battery pack in which a plurality of battery cells is installed is provided.

Additional aspects will be set forth, in part, in the description which follows and, in part, will be apparent from the description, or may be learned by practice of the presented embodiments of the present disclosure.

According to one or more embodiments, a battery pack provided with a fire protection materials (FPM) sheet includes a battery block including a plurality of battery cells electrically connected to one another, a battery case defining an accommodating space in which the battery block is accommodated, and a wing portion adjacent to the battery case and bent to cover at least four surfaces of the battery block.

The battery case may include an upper case and a lower case coupled to face each other to seal the accommodating space, and the FPM sheet may include an upper FPM sheet adjacent to the upper case and a lower FPM sheet adjacent to the lower case.

The FPM sheet may include a through-hole through which a first boss protruding from the battery block passes.

The FPM sheet may include a space apart from an inner wall of the battery case and the battery block.

The battery block may include a first boss passing through the FPM sheet, the battery case may include a second boss coupled to the first boss, and the FPM sheet may be installed in a structure pressed in a sandwich form by the first boss and the second boss.

The first boss may include a penetrating portion penetrating the FPM sheet and a pressing unit pressing the FPM sheet.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a perspective view of a battery pack according to one or more embodiments;
FIG. 2 is an exploded perspective view of a main component of a battery pack shown in FIG. 1;
FIG. 3 is a cross-sectional view of the battery pack along the line III-III shown in FIG. 1;
FIG. 4 is an enlarged view of a region "A" shown in FIG. 3;
FIG. 5 is a cross-sectional view of the battery pack along the line V-V shown in FIG. 1; and
FIG. 6 is an enlarged view of a region "B" shown in FIG. 5.

### DETAILED DESCRIPTION

Reference will now be made in further detail to some embodiments, examples of which are illustrated in the accompanying drawings, wherein like reference numerals refer to like components throughout. In this regard, the present embodiments may have different forms and should not be construed as being limited to the descriptions set forth herein. Accordingly, the embodiments are merely described below, by referring to the figures, to explain aspects of the present disclosure.

Herein, some embodiments of the present disclosure will be described in further detail with reference to the attached drawings to allow those of ordinary skill in the art to easily carry out the embodiments of the present disclosure. However, the present disclosure may be implemented in various different forms, and is not limited to the embodiments described herein. In addition, in describing embodiments of the present disclosure, when it is determined that a detailed description of a related known function or configuration may unnecessarily obscure the gist of the present disclosure, the detailed description thereof may be omitted. Moreover, the same reference numerals are used for parts having similar functions and actions throughout the drawings.

When a portion is referred to as "includes" or "including" a component, the portion may not exclude another component but may further include another component unless stated otherwise. More specifically, it is to be understood that the terms "include," "have," or the like are used herein to indicate the presence of features, numbers, steps, operations, components, parts, or a combination thereof described in the specification, and do not preclude the presence or addition of one or more other features, numbers, steps, operations, components, parts, or a combination thereof.

Singular forms include plural forms unless apparently indicated otherwise contextually. In addition, the shapes and sizes of components in the drawings may be exaggerated for clarity of description.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

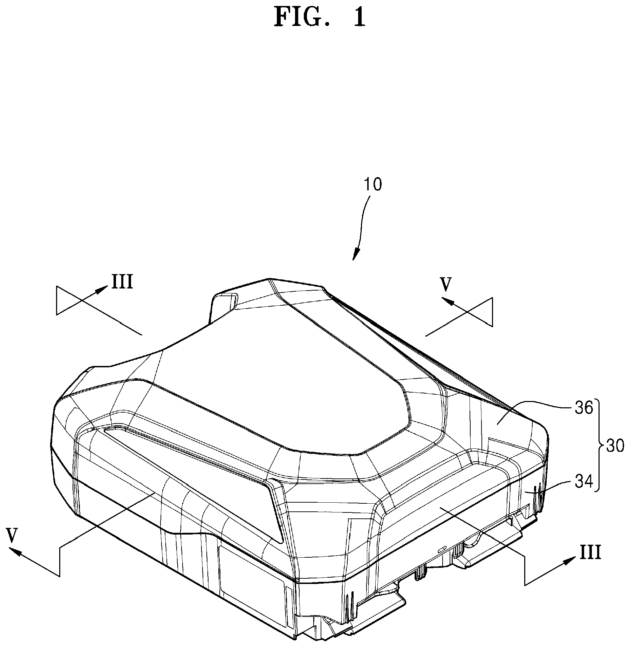

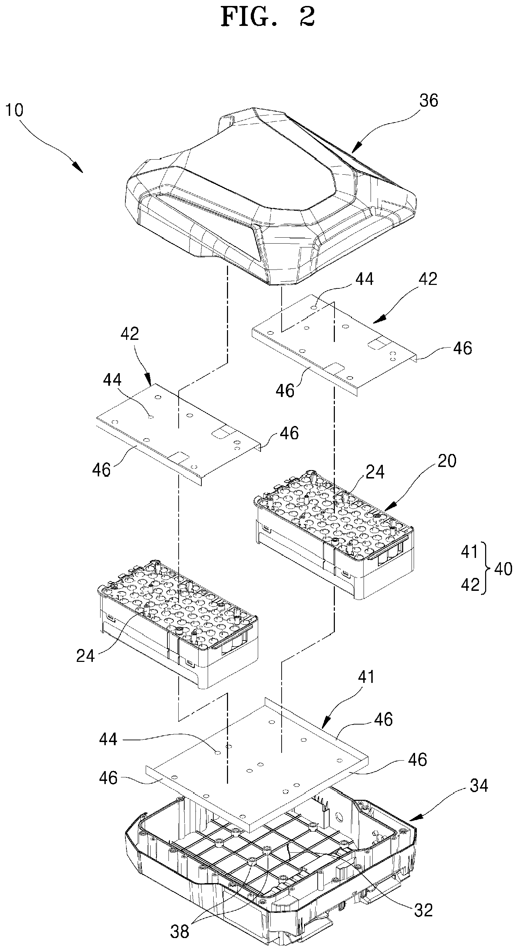

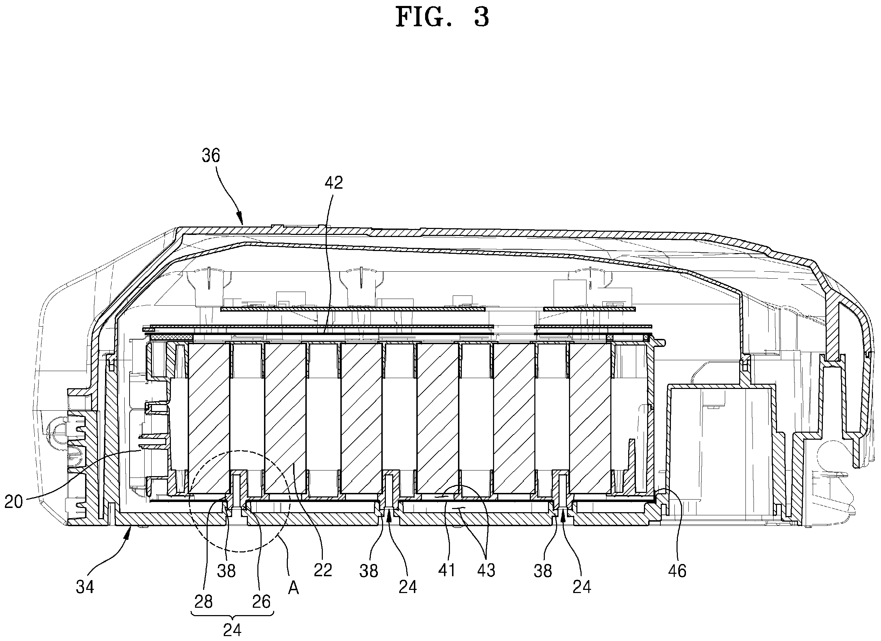

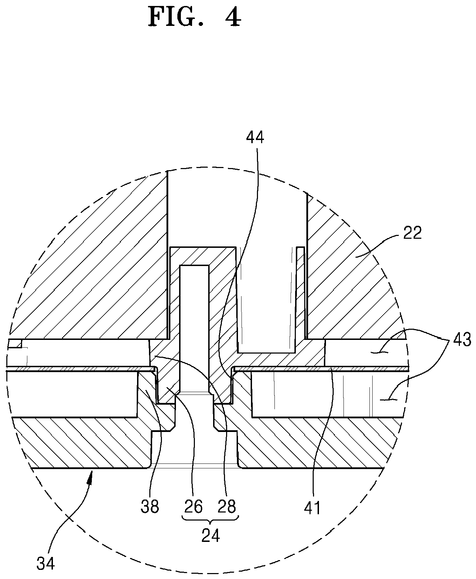

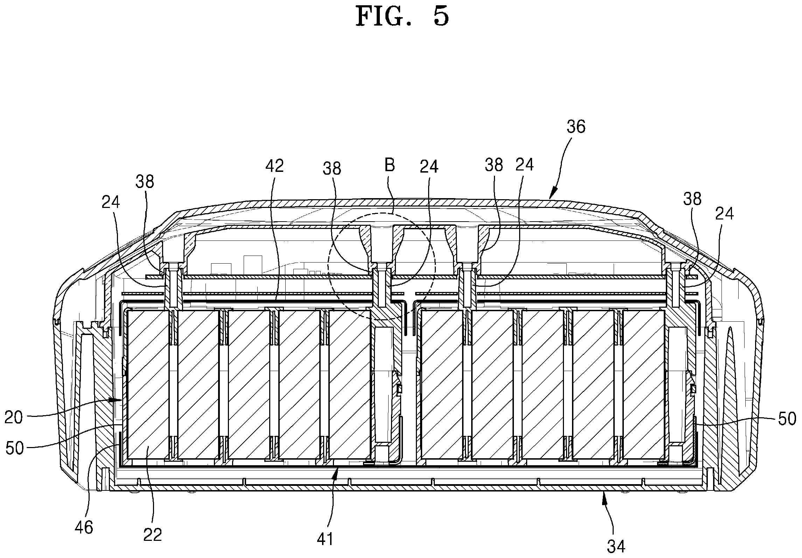

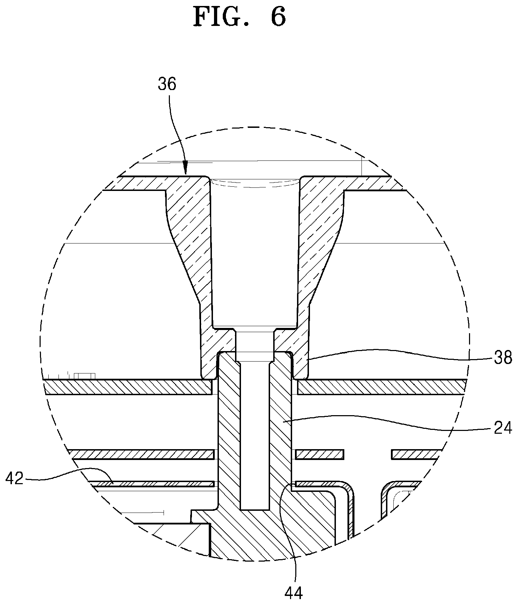

FIG. 1 is a perspective view of a battery pack according to one or more embodiments of the present disclosure. FIG. 2 is an exploded perspective view of a main component of the battery pack shown in FIG. 1. FIG. 3 is a cross-sectional view of the battery pack along the line III-III shown in FIG. 1. FIG. 4 is an enlarged view of a region "A" shown in FIG. 3. FIG. 5 is a cross-sectional view of the battery pack along the line V-V shown in FIG. 1. FIG. 6 is an enlarged view of a region "B" shown in FIG. 5.

Referring to FIGS. 1 to 6, a battery pack 10 including a fire protection materials (FPM) sheet (herein, a "battery pack") according to one or more embodiments of the present disclosure includes a battery block 20, a battery case 30, and an FPM sheet 40.

The battery block 20 includes a plurality of battery cells 22. The plurality of battery cells 22 are electrically connected to one another. For example, the battery cells 22 may be cylindrical battery cells.

The battery case 30 has a structure that provides, or defines, an accommodating space 32 in which the battery block 20 is accommodated. The battery case 30 may include a lower case 34 and an upper case 36 coupled to the lower case 34. The upper case 36 and the lower case 34 may be coupled to face each other so as to seal the accommodating space 32. A coupling portion between the lower case 34 and the upper case 36 may form a sealing structure. In an embodiment, the accommodating space 32 provided by the battery case 30 may have a waterproof and dustproof class of IP67.

The FPM sheet 40 may be a member including a fire protection agent. The fire protection agent forming the FPM sheet 40 may include a product known in the art. In an embodiment, the fire protection agent may be stored in a capsule form. The fire protection agent included in the FPM sheet 40 may react on its own if an ambient temperature reaches a specific temperature range. The FPM sheet 40 may absorb and cool ambient oxygen to initially extinguish a fire, and block introduction of external oxygen to prevent or substantially prevent reignition.

The FPM sheet 40 includes a wing portion 46. The FPM sheet 40 may be formed adjacent to the battery case 30. The FPM sheet 40 may cover at least four surfaces of the battery block 20 due to the wing portion 46. For example, the FPM sheet 40 may be arranged such that a main body portion covers an upper portion and a lower portion of the battery block 20 and the wing portion 46 covers a part of at least two of side surfaces of the battery block 20. A plurality of FPM sheets 40 may be provided. The FPM sheet 40 may be disposed between the lower case 34 and the battery block 20. The FPM sheet 40 may also be disposed between the upper case 36 and the battery block 20. The FPM sheet 40 may include an upper FPM sheet 42 and a lower FPM sheet 41. The upper FPM sheet 42 may be arranged adjacent to the upper case 36. The lower FPM sheet 41 may be arranged adjacent to the lower case 34.

A through hole 44 through which a first boss 24 protruding from the battery block 20 passes may be formed or provided in the FPM sheet 40.

The FPM sheet 40 may have a space 43 apart from an inner wall of the battery case 30 and the battery block 20. For example, the FPM sheet 40 is positioned such that it may be spaced apart from an inner wall of the battery case 30 and the battery block 20.

The FPM sheet 40 may be installed in the battery block 20 via a sheet holder 50. In one or more embodiments, the lower FPM sheet 41 may be installed in the battery block 20 via the sheet holder 50.

The battery block 20 may include the first boss 24 passing through the FPM sheet 40. The first boss 24 may be provided on each of a top surface and a bottom surface of the battery block 20.

The battery case 30 may include a second boss 38 coupled to the first boss 24. The FPM sheet 40 may be installed in a structure pressed in the form of a sandwich by the first boss 24 and the second boss 38. In one or more embodiments, the lower FPM sheet 41 may be installed in a structure pressed in the form of a sandwich by the first boss 24 and the second boss 38.

The first boss 24 may include a penetrating portion 26 and a pressing unit 28. The penetrating portion 26 may be a structure penetrating the FPM sheet 40. The pressing unit 28 may be a flange structure extending from an upper portion of the penetrating portion 26 to a side surface thereof. The pressing unit 28 may be arranged to press the FPM sheet 40. In one or more embodiments, the lower FPM sheet 41 may be press-installed in the form of a sandwich by the pressing unit 28 and the second boss 38.

Herein, working effects of the battery pack 10 including the components as described above will be described in further detail as an example of a fire occurring in the battery pack 10.

The plurality of battery cells 22 installed inside the battery pack 10 may be heated by repeated charging and discharging. If an unexpected voltage shock occurs or a protective circuit that controls charging and discharging is damaged in a charging and discharging process, the battery cell 22 may be overheated and, thus, a fire may occur. If a fire occurs in the battery cell 22, a temperature inside the battery case 30 may sharply increase. The FPM sheet 40 may automatically spray a fire protection agent if a specific temperature range is reached. In this process, the agent sprayed from the FPM sheet 40 may be sprayed toward the battery block 20 and the inner wall of the battery case 30. As the FPM sheet 40 is arranged apart from the inner wall of the battery case 30 and the battery block 20, the fire protection agent may be uniformly or substantially uniformly sprayed on the battery block 20 and the inner wall of the battery case 30 to secure a sufficient reaction area through the space 43. Thus, the fire protection agent sprayed from the FPM sheet 40 may primarily react with hydrogen and methane generated in the case of fire, thus generating an inert gas. The fire protection agent sprayed from the FPM sheet 40 may block a movement of oxygen. As a result, a fire occurring inside the battery pack 10 may be effectively extinguished by the working effect of the FPM sheet 40.

As described above, the battery pack according to embodiments of the present disclosure may include a wing portion arranged between a battery block including a plurality of battery cells and a battery case providing an accommodating space that accommodates the battery block and bent to cover at least four surfaces of the battery block, such that a fire protection agent may be effectively sprayed to the battery block and the battery case if a fire occurs in the battery cells, thereby maximizing or increasing fire protection capability.

Since a space is provided between the FPM sheet and the battery block and the battery case in embodiments of the present disclosure, the fire protection agent may effectively react with oxygen or methane generated in the case of a fire, thereby further improving the effect of blocking the supply of oxygen.

While the present disclosure has been described with reference to some example embodiments, the present disclosure is not limited to the above embodiments, and it will be apparent that many variations are possible within the technical idea of the present disclosure by those of ordinary skill in the art.

The battery pack provided with the FPM sheet according to embodiments of the present disclosure may include a wing portion arranged between a battery block including a plurality of battery cells and a battery case providing an accommodating space that accommodates the battery block and bent to cover at least four surfaces of the battery block, such that a fire protection agent may be effectively sprayed on the battery block and the battery case if a fire occurs in the battery cells, thereby maximizing or increasing fire protection capability.

Since a space is provided between the FPM sheet and the battery block and the battery case in the embodiments of the present disclosure, the fire protection agent may effectively react with oxygen or methane generated in the case of fire, thereby further improving the effect of blocking the supply of oxygen.

It is to be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it is to be understood by those of ordinary skill in the art that various changes in form and details may be made therein without departing from the scope of the present disclosure as set forth by the following claims.

## Claims

1. A battery pack provided with a fire protection materials (FPM) sheet, the battery pack comprising:
a battery block comprising a plurality of battery cells electrically connected to one another;
a battery case defining an accommodating space in which the battery block is accommodated; and
a wing portion adjacent to the battery case and bent to cover at least four surfaces of the battery block.

2. The battery pack as claimed in claim 1, wherein the battery case comprises an upper case and a lower case coupled to face each other to seal the accommodating space, and
the FPM sheet comprises an upper FPM sheet adjacent to the upper case and a lower FPM sheet adjacent to the lower case.

3. The battery pack as claimed in claim 1 or claim 2, wherein the FPM sheet comprises a through-hole through which a first boss protruding from the battery block passes.

4. The battery pack as claimed in any one of claims 1 to 3, wherein the FPM sheet comprises a space apart from an inner wall of the battery case and the battery block.

5. The battery pack as claimed in claim 4, wherein the battery block comprises a first boss passing through the FPM sheet,
the battery case comprises a second boss coupled to the first boss, and
the FPM sheet is installed in a structure pressed in a sandwich form by the first boss and the second boss.

6. The battery pack as claimed in claim 5, wherein the first boss comprises a penetrating portion penetrating the FPM sheet and a pressing unit pressing the FPM sheet.
